# EUROPÄISCHE PATENTSCHRIFT

(11) **EP 0 926 213 B1**
(45) Veröffentlichungstag und Bekanntmachung des Hinweises auf die Patenterteilung: **17.07.2002**
(21) Anmeldenummer: 98123545.0
(22) Anmeldetag: 09.12.1998
(51) Int. Cl.: C09J 7/02, B32B 27/34

(54) **Mehrlagiges Klebeband**
Multi-layered adhesive tape
Ruban adhésif multicouche

(30) Priorität: 23.12.1997 DE 19757426
(43) Veröffentlichungstag der Anmeldung: 30.06.1999
(73) Patentinhaber: Tesa AG, 20253 Hamburg (DE)
(72) Erfinder: Szonn, Bodo, 24647 Wasbek (DE); Kluge-Paletta, Werner, 21244 Buchholz (DE); Karmann, Werner Dr., 22147 Hamburg (DE)

(56) Entgegenhaltungen:
- EP-A- 0 874 034
- WO-A-97/18275
- US-A- 5 484 848

## Beschreibung

Die Erfindung betrifft ein haftklebend beschichtetes Klebeband mit einer gummielastischen Trägerschicht, einer ein- oder beidseitigen energieelastischen Zwischenschicht und einer Haftkleberschicht auf einer oder beiden Seiten.

Die Verwendung von Zwischenschichten zwischen der eigentlicher Trägerschicht und der haftklebenden Beschichtung ist bekannt. Diese Zwischenschichten dienen unter anderem dazu, eine Migration von Bestandteilen aus der Trägerschicht in den Haftkleber abzuschwächen oder zu vermeiden. Eine derartige Migration kann zu strukturellen Veränderungen in der Haftkleberschicht und/oder zu Ablagerungen auf der Haftkleberoberfläche und damit zu einer Reduzierung des Haftvermögens führen. Den Zwischenschichten kommt darüber hinaus die Aufgabe zu, unebene Trägeroberflächen zu glätten.
Im Falle des verklebten Klebebandes können Zwischenschichten, besonders wenn sie energieelastisch verformbar sind, die Funktion haben, Spannungsspitzen, die größer sind als die mittlere auf die Verklebungsfläche wirkende Kraft, aufzunehmen und über die Fläche der Verklebung zu verteilen, um damit einem Bruch der Verklebung entgegenzuwirken.

Beispielsweise ist für diesen Einsatzzweck die Verwendung von dünnen Schichten aus Polymeren bekannt, die sich aufgrund ihrer hohen Glasübergangstemperatur und/oder ihrer Teilkristallinität thermodynamisch in einem energieelastischen Zustand befinden. Insbesondere erfüllen Polyamide die Anforderungen, die an eine Zwischenschicht gestellt werden.
Nachteilig bei den aus Polyamiden bestehenden Zwischenschichten ist jedoch, daß sie die sperrende, die glättende und die kräfteaufnehmende Funktion oft erfüllen, aber gleichzeitig die Adhäsion dieser zum darunter liegenden Träger nicht ausreichend ist.

Bei höheren Beanspruchungen des Klebebandes, insbesondere bei Beanspruchungen, bei denen Schälkräfte wirksam werden, kann es dann zu Delaminierungen kommen, die gegebenenfalls zu einem vollständigen Versagen der Verklebung führen.

Aufgabe der Erfindung war es daher, ein Klebeband zur Verfügung zu stellen, das bei einer gummielastischen Trägerschicht eine energieelastische Zwischenschicht aufweist, die sicher auf der Trägerschicht verankert ist.

Zur Lösung der Aufgabe schlägt die Erfindung ein ein- oder beidseitig haftklebend ausgerüstetes Klebeband mit einer gummielastischen Trägerschicht vor, wobei das polymere Grundgerüst der Trägerschicht im wesentlichen aus Naturkautschuk oder einer Mischung aus Naturkautschuk mit mindestens einem Styrol-Butadien-Kautschuk besteht.

Der Styrol-Butadien-Kautschuk der Trägerschicht kann ein statistisches Copolymer mit einem Anteil von etwa 23 Gew.-% Styrol sein. Der für die Trägerschicht verwendete Naturkautschuk oder die Mischung aus Naturkautschuk mit dem Styrol-Butadien-Kautschuk sind durch Elektronenstrahlen vernetzbar.

In der Trägerschicht ist erfindungsgemäß ein elektronenstrahlvernetzbarer mehrfunktioneller Vernetzer, enthalten, welcher partiell in dem polymeren Grundgerüst löslich ist und dessen physikalische Wechselwirkungskräfte mit dem polymeren Grundgerüst so gering sind, daß er zur Diffusion an die Oberfläche der Trägerschicht neigt, wo er zusammen mit seinem nicht im polymeren Grundgerüst gelösten Anteil einen dünnen Film ausbildet, der vollflächig die Zwischenschicht aus Polyamid berührt. *Bei dem multifunktionellen Vernetzer handelt es sich entweder um ein Oligoacrylat, bestehend aus einem Polyol mit mindestens zwei endständigen Vinylgruppen, das ethoxyliert ist, oder um ein Oligovinylether*, *der aus Polyol oder Oligoether mit mindestens zwei endständigen Vinylgruppen besteht.*

Dann ist der elektronenstrahlvernetzbare mehrfunktionelle Vernetzer in dem Polyamid mindestens teilweise löslich und kann daher in dasselbe hineindiffundieren. Durch Bestrahlung mit Elektronen werden das reine Grundgerüst des Trägers, das Grundgerüst des Trägers zusammen mit dem Vernetzer, der in dem Träger verteilte reine Vernetzer, der filmartig auf der Oberfläche des Trägers befindliche Vernetzer und die in die Zwischenschicht aus Polyamid diffundierten Anteile des Vernetzers, gegebenenfalls unter Anbindung an das Polyamid vernetzt, so daß eine unlösbare, vorwiegend kovalente Anbindung der Zwischenschicht an den Träger erreicht wird.

Es ist vorteilhaft, wenn das Verbundprodukt aus Träger, Vernetzerfilm und Polyamid mit Elektronen bestrahlt wird, bevor dieser an die dem Kautschukträger entgegengesetzte Seite des Polyamides diffundiert ist.

Die Bestrahlung des Verbundproduktes kann zum Beispiel mit einem Elektronenbeschleuniger vom Scannertyp bei einer Strahlendosis von 10 kGy bis 200 kGy, bevorzugt von 50 bis 100 kGy, ganz besonders bevorzugt 80 kGy, vorgenommen werden. Die erforderliche Beschleunigungsspannung hängt von der Dicke des zu vernetzenden Verbundproduktes ab. Zur Erreichung einer ausreichenden Homogenität der Vernetzung kann das Verbundprodukt von beiden Seiten bestrahlt werden.

Das vernetzte Verbundprodukt aus Träger, Vernetzerfilm und Zwischenschicht aus Polyamid trägt auf der Zwischenschicht vorzugsweise einen Haftkleber auf Polyacrylatbasis, der vernetzt oder unvernetzt sein kann.
Die Vernetzung des Haftklebers kann separat auf einem Hilfsträger oder im Verbund mit Zwischenschicht und Träger durch eine chemische Reaktion über einen inhärenten Mechanismus und/oder physikalisch durch Bestrahlung mit Elektronen im Zuge der Vernetzung des Trägers mit der Zwischenschicht erfolgen.

Der dem Träger zugeführte, an seine Oberfläche als löslicher Anteil diffundierende und als unlöslicher Anteil sich u. a. dort abscheidende Vernetzer, der nach partieller Diffusion in die anliegende Zwischenschicht aus Polyamid nach seiner Vernetzung mit Elektronenstrahlen die Verankerung der Zwischenschicht auf dem Träger bewirkt, ist ein mehrfunktionelles, insbesondere di-, tri- oder tetrafunktionelles Oligoacrylat, *bestehend aus einem Polyol mit mindestens zwei endständigen Vinylgruppen, das ethoxyliert ist,* oder ein Oligovinylether mit endständigen elektronenstrahlvernetzbaren Vinylgruppen. Die die Vinylgruppen tragende Basisverbindung kann beispielsweise ein ethoxyliertes oder nicht ethoxyliertes Polyol oder ein Oligoether mit endständigen OH-Gruppen sein.
Erfindungsgemäß kann der Vernetzer allein oder in Abmischung mit einem oder mehreren anderen Vernetzern gleicher oder unterschiedlicher Funktionalität der Trägerrezeptur zugemischt werden.

So können beispielsweise ein bifunktionelles Urethanacrylat mit einem mittleren Molekulargewicht von 5000 oder ein tetrafunktionelles Oligoetheracrylat mit einem mittleren Molekulargewicht von 1000 oder ein trifunktionelles Oligoetheracrylat wie ethoxyliertes Trimethylolpropantriacrylat für sich allein eingesetzt werden. Es ist aber auch möglich, das bifunktionelle Urethanacrylat oder das tetrafunktionelle Oligoetheracrylat zu gleichen oder ungleichen Teilen mit dem trifunktionellen ethoxylierten Trimethylolpropantriacrylat abzumischen.

Vorzugsweise wird die Trägerrezeptur mit dem Vernetzer oder dem Gemisch aus unterschiedlichen Vemetzem in einer Menge von 5 Gew.-% bis 20 Gew.-%, insbesondere 7 Gew.-%, versetzt.

Zur Erhöhung der Standfestigkeit des Trägers können diesem übliche Alterungsschutzmittel, die je nach Anwendungsfall aus der Klasse der verfärbenden oder nicht verfärbenden Alterungsschutzmitteln stammen können, insbesondere im Bereich zwischen 0 bis 10 phr, sowie bekannte Lichtschutzmittel oder Ozonschutzmittel hinzugefügt werden. Darüber hinaus ist eine Abmischung mit Weichmachern möglich.
Um die gewünschten Eigenschaften des Trägers gezielt einzustellen, kann gegebenenfalls die Verwendung von Füllstoffen erfolgen. So kann der Naturkautschuk oder die Mischung aus Naturkautschuk und Styrol-Butadien-Kautschuk mit verstärkenden, semiverstärkenden oder nicht verstärkenden Rußen insbesondere zwischen 0 bis 50 phr, Zinkoxid insbesondere zwischen 0 bis 50 phr und/oder anderen Füllstoffen wie Kieselsäure, Silikaten oder Kreide versetzt werden. Neben den genannten ist auch die Verwendung weiterer Füllstoffe möglich. Weiterhin können auch Harze aus der Klasse der Phenol- und/oder Kohlenwasserstoffharze im Bereich insbesondere zwischen 0 bis 50 phr zugesetzt werden. Alle diese genannten Zusatzstoffe können je nach Einsatzzweck des Klebebandes entweder allein oder in beliebiger Kombination miteinander zur Herstellung des Trägers eingesetzt werden, um eine optimale Abstimmung auf die Verwendung zu erhalten. Durch den Einsatz dieser Zusatzstoffe ist auch die Schwarzfärbung des Trägers, wie sie von der Industrie i.a. gefordert wird, problemlos möglich.

Die Trägerschicht weist eine Dicke von 400 µm bis 3000 µm, insbesondere 500 µm bis 1400 µm, auf.

Die Anfertigung der Trägermischung findet vorzugsweise in einem für die Elastomer-Compoundierung typischen Innenmischer statt. Vorzugsweise erfolgt eine lösungsmittelfreie Verarbeitung. Dem Naturkautschuk oder der Mischung aus Naturkautschuk mit Styrol-Butadien-Kautschuk werden gegebenenfalls gleichzeitig der elektronenstrahlvernetzbare mehrfunktionelle Vemetzer und die gewünschten Füllstoffe zugesetzt. Die so hergestellte Mischung kann anschließend auf handelsüblichen Maschinen auf die gewünschte Dicke extrudiert oder kalandriert werden. Dabei ergibt sich eine Dicke der Trägerschicht innerhalb der oben angeführten Bereiche.

Die Zwischenschicht besteht in einer bevorzugten Ausführungsform aus einem Polyamid oder einer Mischung von Polyamiden, in der mehrfunktionelle Oligoacrylate partiell löslich sind, so zum Beispiel aus einem amorphen temären Copolyamid mit alicyclischen Bausteinen, welches unterschüssig mit einem teilkristallinen Polyiminoamid abgemischt sein kann.
Dann kann ein Polyamid Verwendung finden, welches alicyclische Segmente enthält, oder eine Mischung von Polyamiden, deren überschüssige Komponente alicyclische Segmente enthält.

Die Zwischenschicht kann dabei in einem separaten Arbeitsgang aus der Lösung oder lösungsmittelfrei durch Extrusion mit oder ohne Hilfsträger hergestellt werden, und zwar in einer Dicke von 5 µm bis 40 µm, insbesondere 8 µm. Sollte ein Hilfsträger Verwendung finden, ist die Zwischenschicht von diesem ohne Einschränkung wieder abziehbar.

Der Haftkleber besteht vorzugsweise aus Copolymerisaten von 2-Ethylhexylacrylat, Butylacrylat, Methylacrylat und Acrylsäure, vorzugsweise mit einer Zusammensetzung von 50 Gew.-% bis 70 Gew.-% 2-Ethylhexylacrylat und/oder Butylacrylat, 20 Gew.-% bis 40 Gew.-% Methylacrylat, und 0 Gew.-% bis 10 Gew.-% Acrylsäure.
Der Zusatz von weiteren, bekannten Komponenten ist zur Erzielung bestimmter Eigenschaften möglich, insbesondere der Zusatz von weiteren Comonomeren, Vernetzern, Klebharzen und Alterungsschutzmitteln. Der Haftkleber kann als Lösung, Dispersion oder Schmelze verarbeitet werden. Er kann direkt oder im Transferverfahren auf die Zwischenschicht aufgetragen werden. Eine chemische Vernetzung des Haftklebers mit Vemetzungsmitteln und/oder eine physikalische Vernetzung mit Elektronenstrahlen ist vorteilhaft. Das Auftragsgewicht des Haftklebers ist ebenfalls je nach Einsatzzweck beliebig innerhalb des Bereiches von 10 g/m² bis 250 g/m², vorzugsweise 40 g/m² bis 150 g/m², wählbar. Weiterhin können eine oder beide Haftkleberschichten mit einem Trennpapier abgedeckt sein, vorzugsweise mit einem beidseitig antiadhäsiv beschichteten Abdeckpapier oder einer Folie auf Basis eines Polyolefins. Die Folie kann beidseitig antiadhäsiv ausgerüstet sein.

Des weiteren umfaßt der Erfindungsgedanke aber auch Verfahren zur Herstellung eines erfindungsgemäßen Klebebands.
In einem bevorzugten Herstellungsverfahren werden die Trägerschicht, eine oder beide Zwischenschichten und eine oder beide Schichten des Haftklebers durch einen Kaschierprozeß zusammengeführt, **insbesondere einem kaltem Kaschierprozeß**.
In einem zweiten bevorzugten Verfahren wird die Trägerschicht zunächst durch einen Kalandrierprozeß auf der von einem Hilfsträger unterstützten, fertig ausgebildeten Zwischenschicht ausgeformt. Die andere Seite der Trägerschicht wird anschließend gegebenenfalls mit einer zweiten Zwischenschicht samt Hilfsträger eingedeckt oder im Falle eines beidseitig mit Zwischenschicht versehenen Hilfsträgers mit der auf der anderen Seite befindlichen zweiten Zwischenschicht während des Aufwickelns des Laminates zur Rolle in Verbindung gebracht. Sobald der Vernetzerfilm auf der Trägeroberfläche mit dem Polyamid der Zwischenschicht in Berührung gekommen ist, setzt die Lösung und Diffusion des Vernetzers in das Polyamid ein. Erfahrungsgemäß kann der noch nicht umgesetzte Vernetzer, der sich auf der Oberfläche der Zwischenschicht befindet, in den Haftkleber diffundieren und dessen Adhäsionskraft auf anwendungstechnischen Haftgründen verschlechtern. Ebenso können bereits vernetzte Anteile des Vernetzers an der Oberfläche der Zwischenschicht die spontane Haftung des Haftklebers auf der Zwischenschicht verringern. Es ist daher vorteilhaft, wenn das Laminat aus Träger und Zwischenschicht mit Elektronen bestrahlt wird, bevor der Vernetzer an die dem Träger entgegengesetzte Oberfläche der Zwischenschicht diffundiert ist. Der Hilfsträger oder die Hilfsträger werden im nächsten Verfahrensschritt abgezogen, abschließend wird im direkten oder im Transferverfahren auf die eine oder beide Zwischenschichten der Haftkleber aufgetragen.

Die vorliegende Erfindung beschreibt die Konstruktion eines Selbstklebebandes unter Ausnutzung der Elektronenstrahlvernetzbarkeit eines teils löslichen und daher an die Oberfläche des Trägers diffundierenden und teils unlöslichen und daher sich u. a. auf der Oberfläche des Trägers abscheidenden mehrfunktionellen, mindestens bifunktionellen Vemetzers, der sowohl mit dem im Träger verbliebenen als auch mit dem in die Zwischenschicht diffundierten Anteil übergangslos in Verbindung steht. Der erfindungsgemäße Träger des Selbstklebebandes besteht aus Naturkautschuk oder einer Mischung aus Naturkautschuk mit einem Styrol-Butadien-Kautschuk, und die erfindungsgemäße Zwischenschicht besteht aus alicyclische Segmente enthaltendem Polyamid, in welchem der mehrfunktionelle Vemetzer löslich ist. Die feste Verbindung der beiden, vorzugsweise durch Trockenkaschierung miteinander in Kontakt gebrachten Schichten wird im wesentlichen durch die Aushärtung des mehrfunktionellen Vernetzers mit Hilfe von Elektronenstrahlen bewirkt. Die auf diese Weise erzielte Verankerung der Zwischenschicht auf dem Träger stellt sicher, daß ein Delaminieren des Klebebands auch unter hohen Beanspruchungen nicht auftritt.

Die der Elektronenbestrahlung vorangehende Diffusion des Vemetzers an die Oberfläche des Trägers und weiter in die Zwischenschicht aus Polyamid erfolgt spontan bei Raumtemperatur und kann durch erhöhte Temperatur beschleunigt werden. Die höchste Haftung des Haftklebers auf der Zwischenschicht wird dann erhalten, wenn die Elektronenbestrahlung durchgeführt wird, bevor der Vemetzer durch Diffusion die dem Haftkleber zugewandte Oberfläche der Zwischenschicht erreicht hat. Die Zeit, welche der Vernetzer benötigt, um dorthin zu gelangen, wird naturgemäß von der Zusammensetzung und der Dicke der Zwischenschicht, der Struktur des Vemetzers, seiner Löslichkeit in der Zwischenschicht und von der Temperatur beeinflußt. Erfahrungsgemäß tritt bei einer Klebebandkonstruktion in der erfindungsgemäßen vorzugsweisen Ausführungsform eine Beeinträchtigung des Haftvermögems des Haftklebers im o. g. Sinne erst dann auf, wenn das nicht vemetzte Verbundprodukt aus Träger und Zwischenschicht mit freiem, diffusionsfähigen Vernetzer länger als 4 Wochen bei einer Temperatur bis 40 °C lagert.

Im folgenden soll die Erfindung anhand von Beispielen näher erläutert werden, ohne damit die Erfindung unnötig einschränken zu wollen.

### Beispiele

### Beispiel 1

Es wurde eine Trägerschicht der in Tabelle 1 angegebene Zusammensetzung zugrunde gelegt.

**Tabelle 1:**

| Zusammensetzung der Trägerschicht für Beispiel 1 | |
|---|---|
| Bestandteile | Gewichtsanteile |
| Naturkautschuk (Standard Malaysian Rubber CV 50) | 41 |
| Polyisopren mit einem Molekulargewicht von 2900 als Weichmacher | 8 |
| Flüssiges Kohlenwasserstoff-Harz mit Viskosität von 20 bis 40 Pas bei 25 °C als Weichmacher | 7 |
| Schlämmkreide | 30,7 |
| halbaktiver Furnaceruß N 772 | 6,5 |
| Alterungsschutzmittel 2,2'-Methylen-bis-(4-methyl-6-tert.-butyl-phenol) | 0,8 |
| Mehrfunktioneller Vernetzer | 6 |

Als Gerüstpolymer wurde ein viskositätsstabilisierter Standard Malaysian Rubber CV 50 verwendet, und als mehrfunktioneller Vernetzer wurden alternativ eingesetzt:
a) ein bifunktionelles Urethanacrylat mit einem mittleren Molekulargewicht von 5000 und einer Viskosität von 40 Pas bei 25 °C
   (Ebecryl 230 von UCB Chemicals),
b) ein trifunktionelles Oligoetheracrylat auf Basis eines ethoxylierten Trimethylolpropans mit einer Viskosität von 80 mPas bei 25 °C
   (Ebecryl 160 von UCB Chemicals),
c) eine Mischung aus beiden zu gleichen Teilen
d) ein tetrafunktionelles Oligoetheracrylat mit einem mittleren Molekulargewicht von 1000 und einer Viskosität von 3,5 Pas bei 25 °C
   (Ebecryl 80 von UCB Chemicals)
e) ein tetrafunktionelles Oligoetheracrylat mit einem mittleren Molekulargewicht von 1000 und einer Viskosität von 3,5 Pas bei 25 °C in Mischung mit dem ethoxylierten Trimethylolpropantriacrylat (Ebecryl 160 von UCB Chemicals) zu gleichen Teilen.

Weiterhin wurden die Füllstoffe Kreide und Ruß sowie zwei Weichmacher und ein phenolisches Alterungsschutzmittel verwendet.

Die Bestandteile wurden unter den in der Gummiindustrie geläufigen Bedingungen in einem Innenmischer zusammengemischt.

Die Zwischenschicht wurde aus einer wässerigen/alkoholischen Lösung einer Mischung aus 65 Gew.-Teilen eines amorphen temären Copolyamides mit alicyclischen Bausteinen (Ultramid 1C von BASF) und 35 Gew.-Teilen eines teilkristallinen Polyiminoamides (Platamid M 1276 von Atochem) durch Verstreichen und Trocknen in einer Strichstärke von 8 µm auf einer Polyethylenterephthalatfolie hergestellt.

Mittels eines Kalanders wurde die Trägermischung auf einem beidseitig mit der Zwischenschicht beschichteten Hilfsträger in einer Dicke von 0,5 mm ausgeformt und zur Rolle aufgewickelt, so daß die Rückseite des Trägers mit der während seiner Ausformung von ihm abgewandten Zwischenschicht in Kontakt kommt. Als Hilfsträger wurde eine 25 µm bis 50 µm starke Polyethylenterephthalatfolie eingesetzt. Während der Lagerung in der Rolle findet auf beiden Seiten des Laminates eine partielle Diffusion des Vemetzers aus dem Träger in die Zwischenschicht statt.

Beide Seiten des Laminates aus Träger und Zwischenschichten wurden nun innerhalb von 24 Stunden mit Elektronenstrahlen bei einer Strahlendosis von 100 kGy vernetzt.

An den auf diese Weise hergestellten vemetzten Mustern wurde die Haftung der Zwischenschicht auf dem Träger untersucht und mit der von den nicht vemetzten Mustern verglichen. Dazu wurde zunächst der Hilfsträger für die Zwischenschichten entfernt. Dann wurde die eine Seite des Laminates mit einem Haftklebeband verstärkt. Auf die andere Seite des Musters wurde ein 30 mm breiter Streifen eines fadenverstärkten Haftklebebandes, welches als tesapack 4588 im Handel ist, unter Vermeidung von Blaseneinschlüssen auf die Zwischenschicht geklebt und 4 mal mit einer 5 kp schweren Rolle überrollt. An den auf 20 mm Breite geschnittenen Prüfstreifen wurde an einer Zugfestigkeitsprüfmaschine mit einer Abzugsgeschwingikeit von 300 mm/min die Abzugskraft der jetzt mit dem fadenverstärkten Haftklebeband verklebten Zwischenschicht vom Träger gemessen.

**Tabelle 2:**

| Abzugskraft der Zwischenschicht vom Träger | | |
|---|---|---|
| | Abzugskraft [N/cm] | |
| Vemetzer, mit dem der Träger abgemischt wurde | nicht elektronenstrahlvernetztes Laminat aus Träger und Zwischenschicht | mit 100 kGy elektronenstrahlvemetztes Laminat aus Träger und Zwischenschicht |
| ohne | 0,2 | 0,4 |
| Ebecryl 230 | 0,6 | 2 |
| Ebecryl 160 | 0,3 | >6 |
| 1 Gew.-TI Ebecryl 160 + 1 Gew.-TI Ebecryl 230 | 0,2 | >6 |
| 1 Gew.-TI Ebecryl 160 + 1 Gew.-TI Ebecryl 80 | 0,4 | >6 |

Der oben beschriebene vemetzte, nun beidseitig fest mit einer Zwischenschicht verbundene Träger wurde beidseitig mit einem Haftkleber beschichtet. Der Haftkleber wurde dazu auf einem antiadhäsiv ausgerüsteten Hilfsträger in einer Trockenstrichstärke von 50 um ausgestrichen und bei einer Temperatur größer 100 °C getrocknet, um eine Vernetzung herbeizuführen.
Zur Herstellung des erfindungsgemäßen Klebebandes wurde der getrocknete, vemetzte Haftkleber im Transferverfahren auf die nach dem Abrollen des Trägers frei liegende Zwischenschicht kaschiert, nachdem der Hilfsträger für die Zwischenschicht entfernt worden war.

Als Haftkleber wurde ein Copolymerisat aus Methylacrylat mit 2-Ethylhexylacrylat und Acrylsäure eingesetzt, welches mit 0,5 % eines mit Titan gebildeten Chelats auf Basis von Acetylaceton bei einer Temperatur ab 100 C vernetzt wird. Das beschriebene Copolymerisat hat die folgende Zusammensetzung:
- 30 Gew.-%: Methylacrylat
- 60 Gew.-%: 2-Ethylhexylacrylat
- 10 Gew.-%: Acrylsäure

### Beispiel 2

Es wurde ein beidseitig klebendes Haftklebeband gemäß der in Beispiel 1 beschriebenen Vorgehensweise hergestellt. Als Träger wurde eine Mischung mit der folgenden Zusammensetzung verwendet:

**Tabelle 3:**

| Zusammensetzung der Trägerschicht für Beispiel 2 | |
|---|---|
| Bestandteile | Gewichtsanteile |
| Naturkautschuk (Standard Malaysian Rubber CV 50) | 62,7 |
| Schlämmkreide | 24,7 |
| halbaktiver Fumaceruß N 772 | 6,2 |
| Alterungsschutzmittel 2,2'-Methylen-bis-(4-methyl-6-tert.-butyl-phenol) | 1,4 |
| mehrfunktionelles Oligoacrylat | 5 |

Als mehrfunktionelles Oligoacrylat wurde ethoxyliertes Trimethylolpropantriacrylat mit einer Viskosität bei 25 °C von 80 mPas (Ebecryl 160 von UCB Chemicals) verwendet.

Als Zwischenschicht wurde wieder die in Beispiel 1 beschriebene Mischung aus zwei Polyamiden eingesetzt

Als Haftkleber kam ein Copolymerisat auf Acrylatbasis mit der in Beispiel 1 beschriebenen Zusammensetzung zur Anwendung.

Um den Zeiteffekt bei der Diffusion des unvernetzten Oligoacrylates durch die Zwischenschichten an deren Oberflächen zu studieren, wurde das unvemetzte Laminat aus dem Träger und den Zwischenschichten unterschiedlich lange bei 20 °C und 40 °C gelagert und danach erst mit Elektronenstrahlen vernetzt.
Dann wurde im Transferverfahren der Haftkleber auf die Zwischenschichten kaschiert und die gesamte Konstruktion eine Woche bei 70 °C gelagert, um zum Zwecke einer optimalen Haftung den Haftkleber auf die Zwischenschichten auffließen zu lassen. Die so hergestellten Muster wurden bei 70 °C einer Scherbelastung unterzogen. Dazu wurde die eine haftklebende Seite eines Musters mit einer 50 µm dicken Aluminiumfolie verstärkt. Daraus wurde ein 13 mm breiter und über 20 mm langer Streifen geschnitten, der in einer Länge von 20 mm mit seiner haftklebenden freien Seite auf eine fein geschliffene Stahlplatte geklebt und 4 mal mit einer 2 kp schweren Rolle festgerollt wurde. Das über die Stahlplatte herausragende Ende des senkrecht positionierten Musters wurde mit einem Gewicht von 10 N belastet. Die Prüfung wurde in einem Trockenschrank bei 70 °C durchgeführt. Es wurde das Bruchverhalten der Muster unter Belastung beobachtet.

**Tabelle 4:**

| Scherstandzeiten bei 70 °C von unterschiedlich lange im unvemetzten Zustand gelagerten Laminaten aus Träger und Zwischenschicht. | | |
|---|---|---|
| | Scherstandzeiten [min] | |
| Lagerungsdauer des Laminates aus Träger und Zwischenschicht vor der Vernetzung mit Elektronenstrahlen | Lagerung bei 20 °C | Lagerung bei 40 °C |
| ohne Lagerung | > 20 000 min | |
| 2 Wochen | > 20 000 min | > 20 000 min |
| 4 Wochen | > 20 000 min | > 20 000 min |
| 12 Wochen | 800 min Adhäsionsbruch zwischen Haftkleber und Zwischenschicht | 900 min Adhäsionsbruch zwischen Haftkleber und Zwischenschicht |

Die Tabelle zeigt, daß ein signifikanter Abfall der Scherstandzeit erst dann auftritt, wenn das Laminat aus Träger und Zwischenschicht vor der Elektronenstrahlvernetzung länger als 4 Wochen bei einer Temperatur bis 40 °C lagert, so daß angenommen werden kann, daß bei der beispielhaft angeführten Konstruktion die Diffusion des Oligoacrylates an die Oberfläche der Zwischenschicht länger als 4 Wochen benötigt. Vor dieser Zeit ist bei der beispielhaft angeführten Konstruktion nicht mit einer Verringerung der Haftung des Haftklebers auf der Zwischenschicht durch vemetztes Oligoacrylat zu rechnen.

## Patentansprüche

1. Ein- oder beidseitig haftklebend ausgerüstetes Klebeband mit einer gummielastischen Trägerschicht, **dadurch gekennzeichnet, daß**
a) die Gerüstsubstanz der Trägerschicht aus Naturkautschuk oder einer Mischung aus Naturkautschuk und mindestens einem Styrol-Butadien-Kautschuk besteht,
b) ein wesentlicher Bestandteil der Trägerschicht ein elektronenstrahlvernetzbarer mehrfunktioneller Vernetzer ist,
wobei der multifunktionelle Vernetzer ein Oligoacrylat ist, bestehend aus einem Polyol mit mindestens zwei endständigen Vinylgruppen, das ethoxyliert ist,
c) auf die Trägerschicht ein- oder beidseitig ein Haftkleber aufgetragen ist,
d) zwischen Trägerschicht und Haftkleber eine Zwischenschicht aus einem Polyamid oder aus einer Mischung von Polyamiden vorhanden ist.

2. Ein- oder beidseitig haftklebend ausgerüstetes Klebeband mit einer gummielastischen Trägerschicht, **dadurch gekennzeichnet, daß**
a) die Gerüstsubstanz der Trägerschicht aus Naturkautschuk oder einer Mischung aus Naturkautschuk und mindestens einem Styrol-Butadien-Kautschuk besteht,
b) ein wesentlicher Bestandteil der Trägerschicht ein elektronenstrahlvernetzbarer mehrfunktioneller Vernetzer ist,
wobei der multifunktionelle Vernetzer ein Oligovinylether ist, bestehend aus einem Polyol oder Oligoether mit mindestens zwei endständigen Vinylgruppen,
c) auf die Trägerschicht ein- oder beidseitig ein Haftkleber aufgetragen ist,
d) zwischen Trägerschicht und Haftkleber eine Zwischenschicht aus einem Polyamid oder aus einer Mischung von Polyamiden vorhanden ist.

3. Klebeband nach Anspruch 1, **dadurch gekennzeichnet, daß** der dem Träger zugemischte, endständige Vinylgruppen tragende ethoxylierte Oligoether ethoxyliertes Trimethylolpropan-triacrylat ist.

4. Klebeband nach den Ansprüchen 1 bis 3, **dadurch gekennzeichnet, daß** der elektronenstrahlvernetzbare mehrfunktionelle Vernetzer in einer auf die Gerüstsubstanz der Trägerschicht bezogenen Menge von 5 Gew.-% bis 20 Gew.-% vorliegt, insbesondere 7 Gew.-%.

5. Klebeband nach den Ansprüchen 1 bis 4, **dadurch gekennzeichnet, daß** die Zwischenschicht aus einem Polyamid besteht, welches alicyclische Segmente enthält, oder aus einer Mischung von Polyamiden besteht, deren überschüssige Komponente alicyclische Segmente enthält.

6. Klebeband nach den Ansprüchen 1 bis 5, **dadurch gekennzeichnet, daß** die Zwischenschicht eine Dicke von 5 µm bis 40 µm, insbesondere 8 µm, aufweist.

7. Klebeband nach den Ansprüchen 1 bis 6, **dadurch gekennzeichnet, daß** die Zwischenschicht durch Extrusion mit oder ohne Hilfsträger hergestellt wird.

8. Klebeband nach den Ansprüchen 1 bis 6, **dadurch gekennzeichnet, daß** die Zwischenschicht aus gelöster Form auf einem Hilfsträger hergestellt wird.

9. Klebeband nach den Ansprüchen 1 bis 8, **dadurch gekennzeichnet, daß** die Haftkleberbeschichtung aus einem Copolymerisat von 2-Ethylhexylacrylat und/oder Butylacrylat mit Methylacrylat und Acrylsäure sowie gegebenenfalls weiteren Comonomeren besteht.

10. Klebeband nach Anspruch 9, **dadurch gekennzeichnet, daß** die Haftkleberbeschichtung folgende Zusammensetzung aufweist:
| | |
|---|---|
| 50 Gew.-% bis 70 Gew.-% | 2-Ethylhexylacrylat und/oder Butylacrylat, |
| 20 Gew.-% bis 40 Gew.-% | Methylacrylat, |
| 0 Gew.-% bis 10 Gew.-% | Acrylsäure und gegebenenfalls weitere Comonomere. |

11. Klebeband nach den Ansprüchen 1 bis 10, **dadurch gekennzeichnet, daß** das Verbundprodukt aus Trägerschicht und Zwischenschicht mit oder ohne Haftkleberschicht mit Elektronenstrahlen bei einer Strahlendosis von 10 kGy bis 200 kGy, insbesondere 50 kGy bis 100 kGy, vernetzt wird.

12. Verfahren zur Herstellung eines Klebebands gemäß mindestens einem der vorhergehenden Ansprüche, **dadurch gekennzeichnet, daß**
die Trägerschicht, die eine oder beide Zwischenschichten und die eine oder beide Schichten des Haftklebers durch einen Kaschierprozeß, insbesondere einem kaltem Kaschierprozeß, zusammengeführt werden.

13. Verfahren zur Herstellung eines Klebebands gemäß mindestens einem der vorhergehenden Ansprüche, **dadurch gekennzeichnet, daß**
die Trägerschicht durch einen Kalandrierprozeß auf der von einem Hilfsträger unterstützten, fertig ausgebildeten Zwischenschicht ausgeformt wird,
gegebenenfalls die Trägerschicht auf der anderen Seite mit einer zweiten Zwischenschicht gegebenenfalls samt Hilfsträger eingedeckt wird,
die Trägerschicht und die Zwischenschicht(en) mit Elektronen bestrahlt werden,
der Hilfsträger oder die Hilfsträger anschließend abgezogen werden,
auf die eine oder beide Zwischenschichten jeweils eine selbstklebende Beschichtung aufgetragen wird.

## Claims

1. Single- or double-sided pressure-sensitive adhesive tape having an elastomeric backing layer, **characterized in that**
a) the framework substance of the backing layer consists of natural rubber or of a mixture of natural rubber and at least one styrenebutadiene rubber,
b) an essential constituent of the backing layer is an electron beam-crosslinkable, polyfunctional crosslinker,
the polyfunctional crosslinker being an oligoacrylate, consisting of a polyol having at least two terminal vinyl groups, which is ethoxylated,
c) a pressure-sensitive adhesive is applied to one or both sides of the backing layer, and
d) between backing layer and pressure-sensitive adhesive there is an interlayer of a polyamide or of a mixture of polyamides.

2. Single- or double-sided pressure-sensitive adhesive tape having an elastomeric backing layer, **characterized in that**
a) the framework substance of the backing layer consists of natural rubber or of a mixture of natural rubber and at least one styrenebutadiene rubber,
b) an essential constituent of the backing layer is an electron beam-crosslinkable, polyfunctional crosslinker,
the polyfunctional crosslinker being an oligovinyl ether consisting of a polyol or oligoether having at least two terminal vinyl groups,
c) a pressure-sensitive adhesive is applied to one or both sides of the backing layer, and
d) between backing layer and pressure-sensitive adhesive there is an interlayer of a polyamide or of a mixture of polyamides.

3. Adhesive tape according to Claim 1, **characterized in that** the vinyl-terminal, ethoxylated oligoether admixed to the backing is ethoxylated trimethylolpropane triacrylate.

4. Adhesive tape according to Claims 1 to 3, **characterized in that** the electron beam-crosslinkable, polyfunctional crosslinker is present in an amount of from 5 to 20% by weight, especially 7% by weight, relative to the framework substance of the backing layer.

5. Adhesive tape according to Claims 1 to 4, **characterized in that** the interlayer consists of a polyamide which comprises alicyclic segments or of a mixture of polyamides whose excess component comprises alicyclic segments.

6. Adhesive tape according to Claims 1 to 5, **characterized in that** the interlayer has a thickness of from 5 to 40 µm, especially 8 µm.

7. Adhesive tape according to Claims 1 to 6, **characterized in that** the interlayer is produced by extrusion with or without auxiliary supports.

8. Adhesive tape according to Claims 1 to 6, **characterized in that** the interlayer is prepared from dissolved form on an auxiliary support.

9. Adhesive tape according to Claims 1 to 8, **characterized in that** the pressure-sensitive adhesive coating consists of a copolymer of 2-ethylhexyl acrylate and/or butyl acrylate with methyl acrylate and acrylic acid, with or without further comonomers.

10. Adhesive tape according to Claim 9, **characterized in that** the pressure-sensitive adhesive coating has the following composition:
| | |
|---|---|
| from 50 to 70% by weight of | 2-ethylhexyl acrylate and/or butyl acrylate, |
| from 20 to 40% by weight of | methyl acrylate, |
| from 0 to 10% by weight of | acrylic acid with or without further comonomers. |

11. Adhesive tape according to Claims 1 to 10, **characterized in that** the combination product of backing layer and interlayer with or without pressure-sensitive adhesive coat is crosslinked with electron beams at a radiation dose of from 10 to 200 kGy, in particular from 50 to 100 kGy.

12. Process for producing an adhesive tape according to at least one of the preceding claims, **characterized in that** the backing layer, the one or two interlayers and the one or two coats of the pressure-sensitive adhesive are brought together by a laminating process, especially a cold laminating process.

13. Process for producing an adhesive tape according to at least one of the preceding claims, **characterized in that** the backing layer is shaped by a calendering process on the ready-formed interlayer, which is supported by an auxiliary support,
if desired, the backing layer is covered on the other side by a second interlayer, together, if desired, with auxiliary support,
the backing layer and the interlayer(s) are irradiated with electrons,
the auxiliary support or supports is or are then peeled off, and
a self-adhesive coating is applied to each of the one or two interlayers.

## Revendications

1. Bande adhésive apprêtée d'adhésif de contact sur un côté ou sur les deux côtés, présentant une couche support élastomère, **caractérisée en ce que**
a) la substance structurelle de la couche support est essentiellement constituée de caoutchouc naturel ou d'un mélange de caoutchouc naturel et d'au moins un caoutchouc de styrène et de butadiène,
b) un constituant essentiel de la couche support est un réticulant polyfonctionnel réticulable par des rayons d'électrons, le réticulant polyfonctionnel étant un oligoacrylate, constitué d'un polyol présentant au moins deux groupements vinyle en position terminale, qui est éthoxylé,
c) un adhésif de contact est appliqué sur un côté ou sur les deux côtés de la couche support,
d) une couche intermédiaire constituée d'un polyamide ou d'un mélange de polyamides est présente entre la couche support et l'adhésif de contact.

2. Bande adhésive apprêtée d'adhésif de contact sur un côté ou sur les deux côtés, présentant une couche support élastomère, **caractérisée en ce que**
a) la substance structurelle de la couche support est essentiellement constituée de caoutchouc naturel ou d'un mélange de caoutchouc naturel et d'au moins un caoutchouc de styrène et de butadiène,
b) un constituant essentiel de la couche support est un réticulant polyfonctionnel réticulable par des rayons d'électrons, le réticulant polyfonctionnel étant un oligovinyléther, constitué d'un polyol ou d'un oligoéther présentant au moins deux groupements vinyle en position terminale,
c) un adhésif de contact est appliqué sur un côté ou sur les deux côtés de la couche support,
d) une couche intermédiaire constituée d'un polyamide ou d'un mélange de polyamides est présente entre la couche support et l'adhésif de contact.

3. Bande adhésive selon la revendication 1, **caractérisée en ce que** l'oligoéther éthoxylé portant des groupements vinyle en position terminale, mélangé au support est un triacrylate de triméthylolpropane éthoxylé.

4. Bande adhésive selon les revendications 1 à 3, **caractérisée en ce que** le réticulant polyfonctionnel réticulable par des rayons d'électrons se trouve en une quantité de 5 à 20% en poids, en particulier de 7% en poids, par rapport à la substance structurelle de la couche support.

5. Bande adhésive selon les revendications 1 à 4, **caractérisée en ce que** la couche intermédiaire est constituée d'un polyamide qui contient des segments alicycliques ou d'un mélange de polyamides dont le composant excédentaire contient des segments alicycliques.

6. Bande adhésive selon les revendications 1 à 5, **caractérisée en ce que** la couche intermédiaire présente une épaisseur de 5 µm à 40 µm, en particulier de 8 µm.

7. Bande adhésive selon les revendications 1 à 6, **caractérisée en ce que** la couche intermédiaire est fabriquée par extrusion, avec ou sans support auxiliaire.

8. Bande adhésive selon les revendications 1 à 6, **caractérisée en ce que** la couche intermédiaire est fabriquée à partir d'une forme dissoute sur un support auxiliaire.

9. Bande adhésive selon les revendications 1 à 8, **caractérisée en ce que** le revêtement d'adhésif de contact est constitué d'un copolymère d'acrylate de 2-éthylhexyle et/ou d'acrylate de butyle avec de l'acrylate de méthyle et de l'acide acrylique ainsi qu'avec, le cas échéant, d'autres comonomères.

10. Bande adhésive selon la revendication 9, **caractérisée en ce que** le revêtement d'adhésif de contact présente la composition suivante :
| | |
|---|---|
| 50 à 70% en poids | d'acrylate de 2-éthylhexyle et/ou d'acrylate de butyle, |
| 20 à 40% | d'acrylate de méthyle, |
| 0 à 10% en poids | d'acide acrylique et le cas échéant d'autres monomères. |

11. Bande adhésive selon les revendications 1 à 10, **caractérisée en ce que** le produit composite constitué de la couche support et de la couche intermédiaire, avec ou sans couche d'adhésif de contact, est réticulé avec des rayons d'électrons à une dose d'irradiation de 10 kGy à 200 kGy, en particulier de 50 kGy à 100 kGy.

12. Procédé pour la fabrication d'une bande adhésive selon au moins l'une quelconque des revendications précédentes, **caractérisé en ce que** la couche support, l'une ou les deux couches intermédiaires et l'une ou les deux couches d'adhésif de contact sont assemblées par un procédé de contre-collage, en particulier un procédé de contre-collage à froid.

13. Procédé pour la fabrication d'une bandé adhésive selon au moins l'une quelconque des revendications précédentes, **caractérisé en ce que** la couche support est façonnée par un processus de calandrage sur la couche intermédiaire finie, supportée par un support auxiliaire,
**en ce que** la couche support est le cas échéant recouverte de l'autre côté par une deuxième couche intermédiaire, y compris un support auxiliaire,
**en ce que** la couche support et la ou les couches intermédiaires sont irradiées par des électrons,
**en ce que** le ou les supports auxiliaires sont ensuite enlevés,
**en ce qu'**un revêtement auto-adhésif est appliqué à chaque fois sur une ou les deux couches intermédiaires.
